# EUROPEAN PATENT SPECIFICATION

(11) **EP 3 220 062 B1**
(45) Date of publication and mention of the grant of the patent: **14.08.2019**
(21) Application number: 17160946.4
(22) Date of filing: 14.03.2017
(51) Int. Cl.: F24D 3/08, F24D 11/02, F24D 11/00

(54) **THERMAL INTEGRATED MULTI-SOURCE PLANT**
INTEGRIERTE THERMISCHE ANLAGE MIT MEHREREN QUELLEN
INSTALLATION AYANT DE MULTIPLES SOURCES DE CHALEUR INTÉGRÉES

(30) Priority: 14.03.2016 IT UA20161636
(43) Date of publication of application: 20.09.2017
(73) Proprietor: Riello S.p.A., 37045 Legnago (IT)
(72) Inventor: PERER, Umberto, 31030 ARCADE (IT)
(74) Representative: Andreotti, Erika

(56) References cited:
- EP-A2- 2 072 912
- WO-A1-2014/125306
- DE-A1-102009 007 053
- DE-U1- 20 300 658
- DE-U1-202009 018 196

## Description

The present invention relates to a thermal integrated multi-source plant. In particular, the present invention relates to a thermal integrated multi-source plant configured to heat the sanitary water and to air-condition the domestic environment.

Integrated thermal plants provided with a plurality of thermal sources configured to heat the water intended to supply a circuit for the heating of sanitary water and a circuit for the heating of the domestic environment are well known. Example of plants of this type are disclosed in documents WO2014125306, DE102009007053 and DE20300658U.

An integrated thermal plant according to the preamble of claim 1 is known from the patent WO2014125306.

However, these integrated thermal plants are not able to optimize the exploitation of the thermal sources available.

It is therefore an object of the present invention to provide a thermal integrated multi-source plant, which is able to optimize the exploitation of the thermal sources available in a simple and inexpensive manner, both from the functional and the constructional point of view.

In particular, it is an object of the present invention to exploit in the best possible way each thermal source so as to minimize consumption and pollutant emissions and ensure adequate air-conditioning of the domestic environment and adequate heating of the sanitary water both in winter and summer, and in the intermediate seasons.

In accordance with these objects, the present invention relates to a thermal integrated multi-source plant as claimed in claim 1.

In this way, the plant is structured so as to ensure consumption optimization for the heating of the sanitary water. The first heat exchanger arranged in the first tank is dedicated to the pre-heating of the sanitary water. If the pre-heating of the sanitary water is sufficient for the needs of the users, the sanitary water coming from the first exchanger is sent directly to the users; alternatively, the sanitary water coming from the first exchanger is sent to the second tank where it is further heated or is mixed with the sanitary water coming from the second tank. This solution results in optimum utilization of the thermal sources and consumption savings in dual-storage plants: one for sanitary water and one for technical water.

Further features and advantages of the present invention will be apparent from the following description of a non-limiting embodiment thereof, with reference to the figures of the accompanying drawings, wherein:
- Figure 1 is a schematic view, with parts removed for clarity, of the thermal integrated multi-source plant according to the present invention in a first operating configuration;
- Figure 2 is a schematic view, with parts removed for clarity, of the thermal integrated multi-source plant according to the present invention in a second operating configuration;
- Figure 3 is a schematic view, with parts removed for clarity, of the thermal integrated multi-source plant according to the present invention in a third operating configuration;
- Figure 4 is a schematic view, with parts removed for clarity, of a second embodiment of the thermal integrated multi-source plant in a first operating configuration;
- Figure 5 is a schematic view, with parts removed for clarity, of the second embodiment of the thermal integrated multi-source plant in a second operating configuration;
- Figure 6 is a schematic view, with parts removed for clarity, of the second embodiment of the thermal integrated multi-source plant in a third operating configuration;
- Figure 7 is a schematic view, with parts removed for clarity, of the second embodiment of the thermal integrated multi-source plant in a fourth operating configuration.

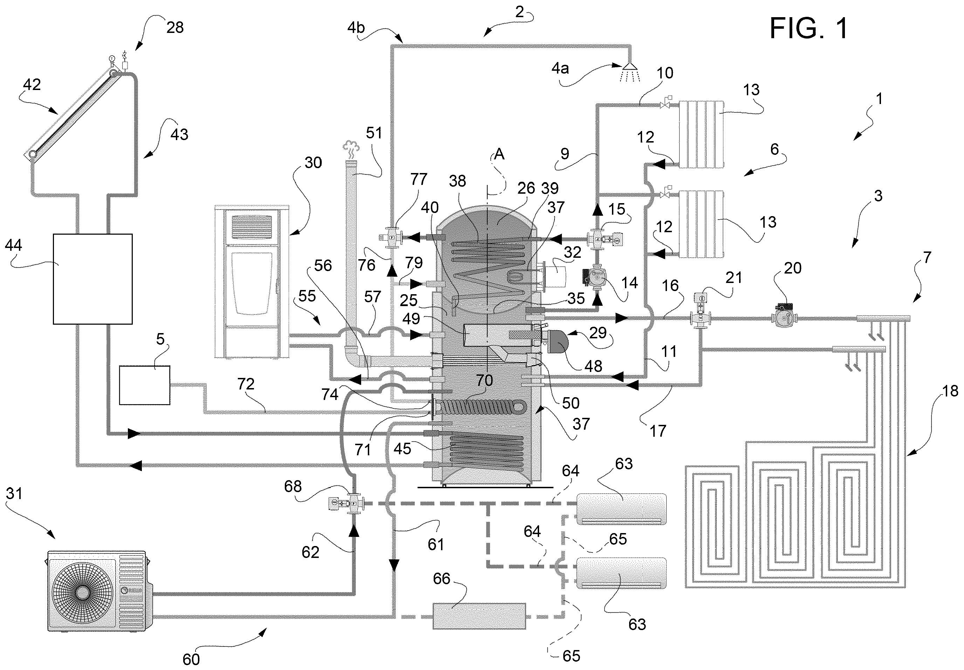

In Figure 1, reference number 1 indicates a thermal integrated multi-source plant according to the present invention, which is connected to a sanitary water plant 2 and to a domestic air-conditioning plant 3.

The sanitary water plant 2 supplies household appliances 4a (only one of which is schematically illustrated in the accompanying figures) with sanitary water coming from the water network 5 (shown schematically in the accompanying figures) and with sanitary water coming from the water network 5 and heated by the plant 1 according to the present invention as described in detail later. In particular, the sanitary water plant 2 comprises a supplying circuit 4b configured to supply sanitary water to household appliances 4a.

In the non-limiting example described and illustrated herein, the air-conditioning plant 3 comprises a high temperature thermal-exchange closed circuit 6 and a low temperature thermal-exchange closed circuit 7. It is understood that the air-conditioning plant 3 can comprise a single high temperature thermal-exchange closed circuit 6 or a single low temperature thermal-exchange closed circuit 7.

The high temperature thermal-exchange closed circuit 6 comprises a supply manifold 9, a plurality of supply conduits 10, a return manifold 11 and a plurality of return conduits 12 and a plurality of high temperature heat exchange devices 13 (only two of which are shown for the sake of simplicity).

The high temperature heat exchange devices 13 can be, for example, radiators, fan coils, towel warmers, etc.

The fluid coming from the plant 1 is supplied to the respective high temperature heat exchange devices 13 by the supply manifold 9 and the respective supply conduits 10. After the heat exchange, the fluid is fed back into the plant 1 by the respective return conduits 12 and the return manifold 11.

The supply manifold 9 is connected to the plant 1 as described in detail later and is provided with a supply pump 14 and a diverter valve 15.

The low temperature thermal-exchange closed circuit 7 comprises a supply manifold 16 and a return manifold 17 and a plurality of low temperature heat exchange devices 18 (for instance floor system conduits) supplied by the supply manifold 16. After the heat exchange, the fluid is fed back into the plant 1 by the return manifold 17.

The supply manifold 16 receives the fluid from the plant 1 and is preferably provided with a supply pump 20 and a mixing valve 21 also connected to the return manifold 17. In this way, if the fluid drawn from the plant 1 through the supply manifold 16 is too hot, the mixing valve 21 mixes the cold fluid from the return manifold 17 with the hot fluid from the supply manifold 16.

The plant 1 shown in Figure 1 further comprises:
- a first tank 25 for the storage of technical water,
- a second tank 26 for the storage of sanitary water,
- a solar plant 28 associated with the first tank 25,
- a boiler 29 associated with the first tank 25,
- a biomass fired boiler 30 associated with the first tank 25,
- a heat pump 31 associated with the first tank 25,
- an electric thermal source 32 associated with the second tank 26,
- a control device (not shown in the attached figures) configured to control the actuation and operation of the various thermal sources 28, 29, 30, 31 and 32 and of the control means of the plant 1 (valves, pumps, etc.) on the basis of the requirements of the air-conditioning plant 3 and of the sanitary water plant 2.

Here and hereinafter, technical water is intended to mean water intended to supply the air-conditioning plant 3. In the non-limiting example described and illustrated herein, the technical water used for filling the first tank 25, the high temperature thermal-exchange closed circuit 6 and the low temperature thermal-exchange closed circuit 7 is water coming from the water network 5 through connections not shown for the sake of simplicity in the attached figures.

The first tank 25 and the second tank 26 are preferably coupled so as to allow heat exchange between the technical water of the first tank 25 and the sanitary water of the second tank 26.

In particular, the first tank 25 and the second tank 26 have a wall 35 in common, along which heat exchange takes place.

In the non-limiting example described and illustrated herein, the second tank 26 is arranged above the first tank such that the shared wall 35 is a top wall for the first tank 25 and a base wall for the second tank 26.

In this way, the warmest portion of the first tank 25 (the upper portion in the vicinity of the top wall) is arranged in the vicinity of the coldest portion of the second tank 26 (the lower portion in the vicinity of the base wall) in order to facilitate the passage of heat from the first tank 25 to the second tank 26.

Both in the first tank 25 and the second tank 26, in fact, the bottom portion defines the "cold area" of the respective tank, while the top portion defines the "hot area" of the respective tank.

Preferably, the shared wall 35 is concave so as to increase the heat exchange surface between the first tank 25 and the second tank 26 and withstand the pressure difference between tank 26 and tank 25. In tank 26, in fact, the pressure values are higher than in tank 25.

The first tank 25 is preferably arranged so as to rest on a flat surface, for example a floor and extends along a vertical axis A.

The second tank 26 is arranged above the first tank 25 and also extends along the vertical axis A.

The first tank 25 and the second tank 26 are preferably cylindrical.

The electric thermal source 32 is associated with the second tank 26 and is configured to heat the sanitary water in the second tank 26.

Preferably, the electric thermal source 32 comprises an electric resistance 37 arranged in the second tank 26 and electrically supplied.

Activation of the electric thermal source 32 can be particularly advantageous if it is supplied by an electrical system equipped with one or more photovoltaic panels.

Preferably, the plant 1 also comprises a heat exchange coil 38 housed in the second tank 26 and supplied with the technical water of the first tank 25. The coil 38 is provided with an inlet 39 connected to the diverter valve 15 of the supply manifold 9 of the air-conditioning plant 3 (supplied with hot technical water of the first tank 25) and with an outlet 40 which comes out into the first tank 25 to discharge into the first tank 25 the technical water cooled during the passage into the second tank 26.

In use, the diverter valve 15 supplies the hot technical water to the coil 38 should the temperature of the sanitary water in the second tank 26 be not sufficient to meet the needs of the users 4.

The actuation of the diverter valve 15 is controlled by the control device.

In the non-limiting example described and illustrated herein, the coil 38 passes through the shared wall 35. The passage through the shared wall 35 is suitably sealed in order to prevent fluid exchange between the first tank 25 and the second tank 26.

The solar plant 28 comprises at least a solar panel 42 and a closed circuit 43, which connects the solar panel 42 to the first tank 25.

In the non-limiting example described and illustrated herein, the closed circuit 43 comprises a hydraulic control assembly 44 (schematically represented in Figure 1) and a coil 45 arranged inside the first tank 25.

The hydraulic control assembly 44 is configured to control the flow of the hot circulating fluid coming from the solar panel 42 and the flow of the circulating fluid cooled during the passage through the coil 45 into the first tank 25 and directed towards the solar panel 42.

The coil 45 is arranged in the "cold" area of the first tank 25 in the vicinity of the bottom of the first tank 25.

The boiler 29 is preferably a liquid fuel fired boiler.

In the non-limiting example described and illustrated herein, the liquid fuel is diesel oil.

A non-illustrated variant provides that the boiler 29 is a gas-fired boiler.

The boiler 29 is equipped with a combustion chamber 49 supplied with the liquid fuel, a cleaning device 50 communicating with the combustion chamber 49, and a chimney 51 communicating with the combustion chamber 49 and configured to discharge the combustion fumes.

Preferably, the combustion chamber 49 is at least partially arranged inside the first tank 25. More preferably, the combustion chamber 49 is completely immersed in the technical water within the first tank 25. In this way, the transfer of heat from the combustion chamber 49 to the technical water contained in the first tank 25 occurs in a direct manner, without transfers which may reduce the heat exchange efficiency and without the use of accessory means (pumps, valves and electrically powered components).

Preferably, the combustion chamber 49 is arranged in the first tank in the upper portion of the first tank 25 in the vicinity of the top wall in common with the bottom wall of the second tank 26.

The biomass fired boiler 30 is connected to the first tank 25 by means of a connecting circuit 55 provided with a heat exchanger arranged inside the biomass fired boiler 30 and not shown in the attached figures, a suction line 56 configured to draw technical water from the first tank 25 and supply it to the heat exchanger, and a supply line 57 configured to supply the technical water heated by the heat exchanger within the biomass fired boiler 30 to the first tank 25.

The suction line 56 draws technical water from the first tank 25 at a height lower than the height at which the supply line 57 comes out, in order to optimize the heating efficiency. The suction line 56 and the supply line 57 are provided with respective terminal elements, which end up into the first tank 25. Preferably, the terminal elements are arranged diverging from one another (the divergence is not visible in the attached schematic figures) so as to promote homogenization.

Preferably, the supply line 57 ends up into the upper portion of the first tank 25 in the vicinity of the top wall in common with the bottom wall of the second tank 26.

In the non-limiting example described and illustrated herein, the supply line 57 ends up substantially at the same height as the combustion chamber 49 of the boiler 29.

Here and hereinafter, the term biomass is intended to mean organic matrix materials, excluding petrochemical plastics and fossil materials, such as for example petroleum and coal. Some examples of biomass are: forest residues, waste from the wood processing industry (shavings, sawdust, etc.), plants expressly cultivated to be used for energy purposes and some waste from livestock holdings. Generally, biomass is available in the form of firewood logs, pellets, sawdust, corn, chips.

The heat pump 31 is a reverse cycle air/water heat pump and is coupled to a supply circuit 60 configured to supply technical water to the first tank 25 or to one or more fan coils 63.

In detail, the supply circuit 60 comprises a return line 61 and a supply line 62, which connect the heat pump 31 to the first tank 25, and one or more supply lines 64 and one or more return lines 65, which connect the heat pump 31 to the respective fan coils 63.

The supply circuit 60 further comprises an accumulator 66 configured to store the technical water heated or cooled during the heat exchange occurred in the fan coils 63. The accumulator 66 is connected to the suction line 61 and acts as an inertial accumulator for the supply circuit 60. This allows for avoiding ON/OFF cycles that are too close together, which would overwork the heat pump 31, thereby compromising its reliability and durability.

The accumulator 66 is a thermally insulated tank.

Preferably, the supply line 62 is provided with a diverter valve 68 connected to the supply lines 64 of the fan coils 63 and controlled by the control device.

Preferably, the suction line 61 draws technical water from the first tank 25 at a height lower than the height at which the supply line 62 comes out, in order to optimize the heating efficiency.

Preferably, the supply line 62 and the suction line 61 end up into the intermediate portion of the first tank 25 between the coil 45 of the solar plant 28 and the suction line 56 of the biomass fired boiler 30.

As will be discussed further below, the heat pump 31 can operate in heating mode (for example in winter or during the intermediate seasons) to heat the technical water of the first tank 25 and/or to heat the environment by supplying hot technical water to the fan coils 63. The heat pump 31 can also operate in cooling mode to cool the technical water supplied to the fan coils 63.

Activation of the heat pump 31 can be particularly advantageous if it is supplied by an electrical system equipped with one or more photovoltaic panels.

Lastly, the plant 1 comprises a heat exchanger 70 arranged in the first tank 25 and provided with an inlet 71 coupled to the water network 5 by a supply line 72, and with an outlet 74, which is selectively couplable to the second tank 26 and/or to the supplying circuit 4b.

In particular, the output 74 is connected to an output line 76 provided with a mixing valve 77 connected to the supplying circuit 4b and to the top portion of the second tank 26 (hot area).

The output line 76 being provided with a connecting branch 79 for the connection with the bottom portion of the second tank 26 (cold area). The connecting branch 79 being arranged upstream of the mixing valve 77.

In use, all the hot sanitary water required by the supplying circuit 4b of the sanitary water heating plant 2 must necessarily pass through the heat exchanger 70.

Preferably, the heat exchanger 70 is located near the bottom of the first tank 25 above the coil 45 of the solar plant 28.

In this way, the sanitary water for consumption is always preheated by means of the heat exchanger 70 in order to continuously exploit the heating coming from the solar plant 28.

Moreover, the heat exchanger 70 removes heat from the area next to the coil 45 of the solar plant 28, thereby optimizing the heat exchange of the same coil 45.

In the non-limiting example described and illustrated herein, the heat exchanger 70 is arranged between the drawing point of the suction line 61 of the heat pump 31 and the point at which the supply line 62 of the heat pump 31 comes out.

In this way, the heat exchanger 70 removes heat from the area next to the drawing and supplying area of the heat pump 31, thereby optimizing the efficiency of the heat pump 31 itself.

The supply manifolds 9 and 16 of the air-conditioning plant 3 are connected to the top portion of the first tank 25 (hot area).

The return manifolds 11 and 17 of the air-conditioning plant 3 are connected to the intermediate portion of the first tank 25 above the coil 45 of the solar plant 28, and more preferably above the heat exchanger 70.

The first tank 25 and the second tank 26 are equipped with temperature sensors configured to send the acquired data to the control device.

The control device processes the acquired temperature data and the request data from the users 4a and from the air-conditioning plant and controls the actuation and operation of the various thermal sources 28, 29, 30, 31 and 32, and of the control means of the plant 1 (valves, pumps, etc.).

Figure 1 shows a winter operating configuration. In the figure, the dashed lines represent non-operating lines.

In the configuration of Figure 1, the heat pump 31 is operated in the heating mode. The air-conditioning plant 3 is supplied with technical water heated by the sources associated with the first tank 25, and the fan coils 63 are not supplied, the air-conditioning plant 3 being already active. The control device controls the activation and operation of the various thermal sources on the basis of the requirements of the air-conditioning plant 3 and of the sanitary water heating plant 2.

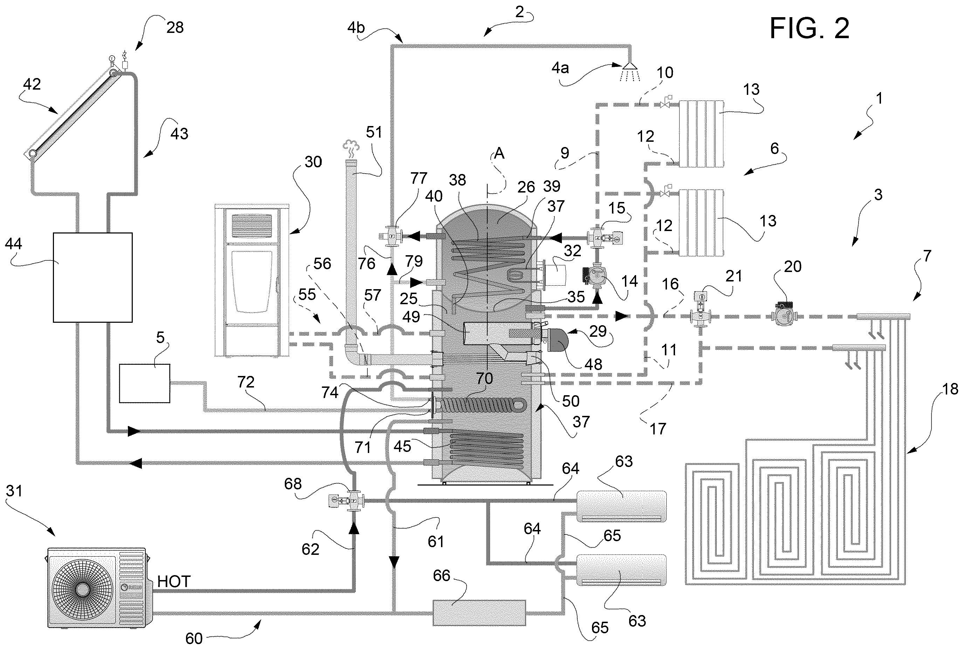

Figure 2 shows a mid-season operating configuration. In the figure, the dashed lines represent non-operating lines.

In the configuration of Figure 2, the heat pump 31 is operated in the heating mode to heat the technical water supplied to the fan coils 63.

In this way, activation of the air-conditioning plant 3 is avoided. For limited heating requirements, the fan coils 63 of the heat pump 31 are sufficient.

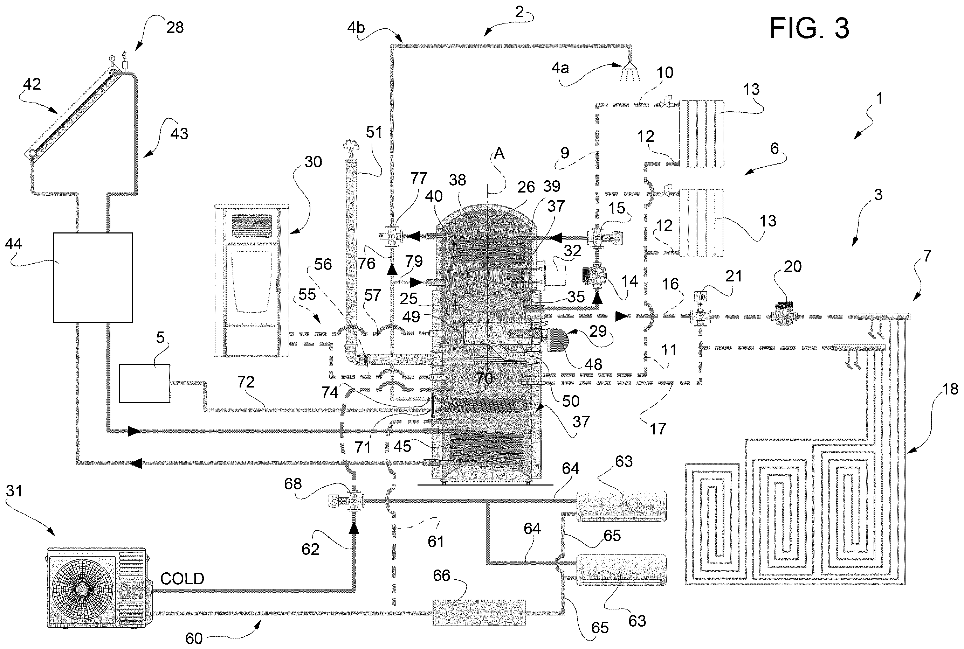

Figure 3 shows a summer operating configuration. In the figure, the dashed lines represent non-operating lines.

In the configuration of Figure 3, the heat pump 31 is operated in the cooling mode to cool the technical water supplied to the fan coils 63. The technical water of the first tank 25 is heated by the solar plant 28 to contribute to the heating of the sanitary water through the heat exchanger 70 and to the heat exchange between the first tank 25 and the second tank 26.

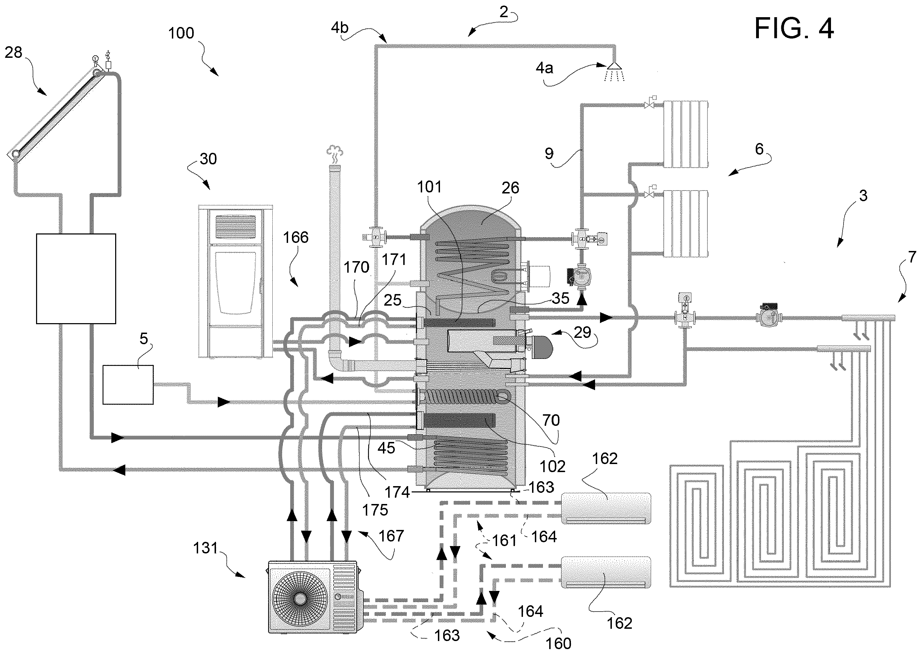

Figures 4-7 show a thermal integrated multi-source plant 100, which differs from the above-described plant 1 in that it comprises a heat pump 131 and a respective supply circuit 160 which are substantially different from the heat pump 31 and the supply circuit 60 previously described, and due to the presence of a second heat exchanger 101 and a third heat exchanger 102 arranged in the first tank 25 and associated with the heat pump 131.

The heat pump 131 is a refrigerant gas direct-expansion heat pump and comprises at least a compressor, an expansion valve, an evaporator, a condenser and a four-way valve (not shown for the sake of simplicity in the attached figures) inside which an operating fluid runs.

The supply circuit 160 comprises one or more first supply subcircuits 161 configured to send the operating fluid to respective splits 162. The operating fluid releases or acquires thermal energy within the splits 162 depending on the operation mode of the heat pump 131.

Each first supply subcircuit 161 comprises a supply line 163 and a return line 164.

The first supply subcircuits 161 are run through by operating fluid drawn downstream of the four-way valve (not shown for the sake of operational simplicity).

The supply circuit 160 also comprises a second supply subcircuit 166 and a third supply subcircuit 167.

The second supply subcircuit 166 is configured to supply the second heat exchanger 101 with the operating fluid drawn from a drawing point arranged downstream of the compressor and upstream of the four-way valve of the heat pump 131, and to supply the heat pump 131 with the operating fluid cooled during the heat exchange in the second heat exchanger 101. The operating fluid cooled in the second heat exchanger 101 is re-entered into the circuit of the heat pump 131 at a point downstream of the drawing point between the compressor and the four-way valve.

The operating fluid drawn downstream of the compressor and upstream of the four-way valve is always hot whether the heat pump 131 operates in the heating mode or in the cooling mode.

In particular, the second supply subcircuit 166 comprises a supply line 170 connecting the heat pump 131 to the inlet of the second heat exchanger 101 and a return line 171 connecting the outlet of the second heat exchanger 101 to the heat pump 131.

The third supply subcircuit 167 is configured to supply the third heat exchanger 102 with the operating fluid drawn from a drawing point downstream of the four-way valve of the heat pump 131, and to supply the heat pump 131 with the operating fluid cooled during the heat exchange in the third heat exchanger 102. The operating fluid cooled in the third heat exchanger 102 is re-entered into the circuit of the heat pump 131 at a point downstream of the four-way valve and downstream of the drawing point.

In particular, the third supply subcircuit 167 comprises a supply line 174 connecting the heat pump 131 to the inlet of the third heat exchanger 102 and a return line 175 connecting the outlet of the third heat exchanger 102 to the heat pump 131.

The third supply subcircuit 167 is activated only when the heat pump 131 is in the heating mode.

The second heat exchanger 101 is preferably arranged in the top portion of the first tank 25, and more in particular in the vicinity of the wall 35 in common with the second tank 26.

Preferably, the second exchanger 101 is arranged between the boiler 29 and the wall 35 in common with the second tank 26.

In this way, the heating action of the second heat exchanger 101 is exploited for the heating of the sanitary water and the heating of the technical water. Advantageously, the second exchanger 101 is supplied with hot operating fluid regardless of the operation mode of the heat pump.

The third heat exchanger 102 is arranged in a bottom portion of the first tank 25, preferably above the coil 45 of the solar plant 28.

Preferably, the third heat exchanger 102 is arranged between the coil 45 of the solar plant 28 and the first heat exchanger 70.

Figure 4 shows a winter operating configuration. In the figure, the dashed lines represent non-operating lines.

In the configuration of Figure 4, the heat pump 131 is operated in the heating mode. Therefore, the second heat exchanger 101 and the third heat exchanger 102 are supplied by hot operating fluid and contribute to the heating of the technical water in the first tank 25 when the heat pump 131 is active. In the non-limiting example described and illustrated herein, the air-conditioning plant 3 is supplied with technical water heated by the thermal sources associated with the first tank 25, and the splits 162 are not supplied, the air-conditioning plant 3 being already active. The control device controls the activation and operation of the various thermal sources on the basis of the requirements of the air-conditioning plant 3 and of the sanitary water heating plant 2.

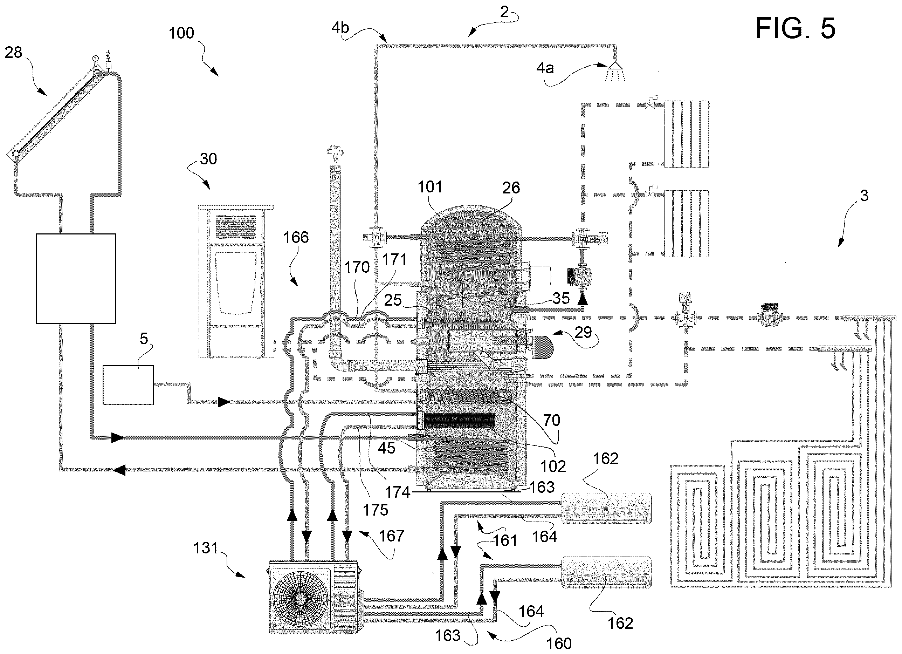

Figure 5 shows a mid-season operating configuration. In the figure, the dashed lines represent non-operating lines.

In the configuration of Figure 5, the heat pump 131 is operated in the heating mode to heat the operating fluid supplied to the second heat exchanger 101, the third heat exchanger 102 and the splits 162.

In this way, activation of the air-conditioning plant 3 is avoided. For limited heating requirements, in fact, the splits 162 of the heat pump 131 are sufficient.

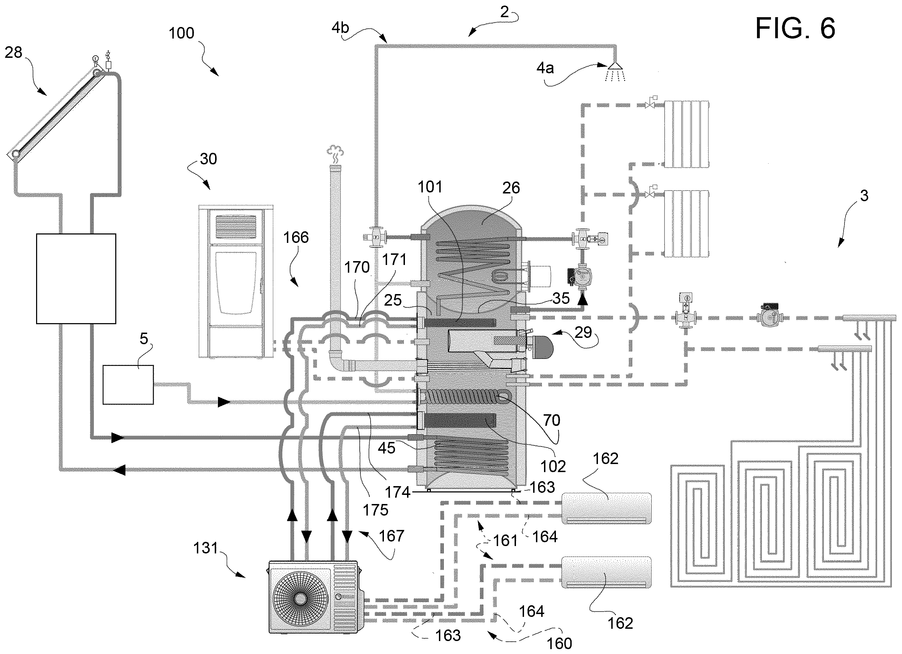

Figure 6 shows a summer operating configuration in which the heat pump is not used for conditioning the environment, but only to contribute to the heating of the sanitary water. In Figure 6, the dashed lines represent non-operating lines.

In the configuration of Figure 6, the heat pump 131 is operated in the heating mode to heat the operating fluid supplied to the second heat exchanger 101 and the third heat exchanger 102. The solar plant 28 is active. The technical water of the first tank 25 is then heated by the solar plant 28 and by the heat exchangers 101 and 102.

In this way, the sanitary water that passes through the heat exchanger 70 is heated. In the event that the heat exchange occurred in the heat exchanger 70 is not sufficient, the diverter valve 77 will send the water coming from the heat exchanger 70 to the second tank 26 or will mix it with the sanitary water stored in the second tank 26.

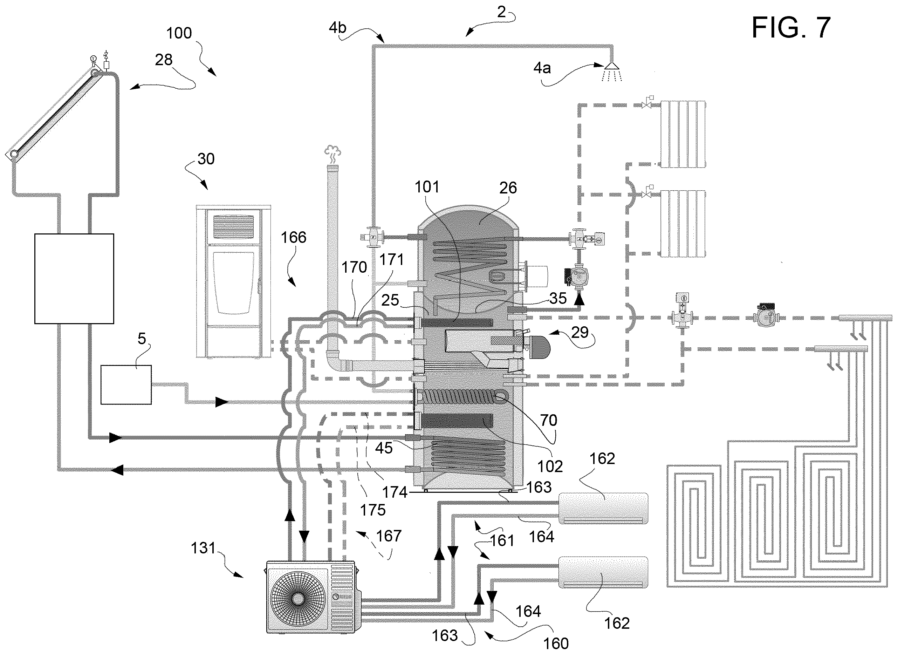

Figure 7 shows a summer operating configuration in which the heat pump 131 is operated in the cooling mode to cool the operating fluid supplied to the splits 162.

The technical water of the first tank 25 is heated by the solar plant 28 and by the second heat exchanger 101. In this way, the sanitary water is heated through the heat exchanger 70 and also thanks to the heat exchange between the first tank 25 and the second tank 26.

Lastly, it is clear that modifications and variations may be made to the plant described herein without departing from the scope of the appended claims.

## Claims

1. A thermal integrated multi-source plant comprising:
• a first tank (25) configured to store technical water and coupled to at least one air-conditioning plant (3);
• at least a first thermal source (28; 29; 30; 31; 131) associated to the first tank (25) and configured to heat the technical water;
• at least a second tank (26) configured to store sanitary water and coupled to a sanitary water supplying circuit (4b); the second tank (26) being coupled to the first tank (25);
• a first heat exchanger (70) arranged in the first tank (25) and provided with an inlet (71) coupled to a water network (5) for receiving sanitary water and with an outlet (74) **characterized in that** the outlet (74) is selectively couplable to the second tank (26) or to the sanitary water supplying circuit (4b).

2. The plant according to claim 1, comprising a mixing valve (77) configured to selectively connect the outlet (74) of the first heat exchanger (70) to the second tank (26) and/or to the sanitary water supplying circuit (4b).

3. The plant according to claim 2, wherein the mixing valve (77) is configured to selectively connect the second tank (26) with the sanitary water supplying circuit (4b).

4. The plant according to any one of the foregoing claims, wherein the second tank (26) is coupled to a top portion of the first tank (25).

5. The plant according to claim 4, wherein the second tank (26) and the first tank (25) have a wall (35) in common.

6. The plant according to claim 5, wherein the wall (35) is a bottom wall of the second tank (26) and a top wall of the first tank (25).

7. The plant according to any one of the foregoing claims, comprising one or more first thermal sources (28; 29; 30; 31; 131) selected from the group consisting of: a heat pump, solar plant, biomass fired boiler, gas fired boiler, liquid fuel fired boiler, electric thermal source.

8. The plant according to any one of the foregoing claims, comprising at least a second thermal source (29; 31; 131) associated to the first tank (25) and configured to heat the technical water.

9. The plant according to claim 8, wherein the second thermal source (29) is a liquid or gaseous fuel fired boiler.

10. The plant according to claim 9, wherein the boiler (29) comprises a combustion chamber (49); the combustion chamber (49) being arranged in the first tank (25).

11. The plant according to claim 8, wherein the second thermal source (29; 31; 131) is a heat pump (131) wherein an operative fluid flows; the heat pump (131) being provided with at least a compressor and a four-way valve.

12. The plant according to claim 11, comprising a second heat exchanger (101) supplied with the operative fluid of the heat pump (131) drawn downstream of the compressor.

13. The plant according to claim 12, wherein the second heat exchanger (101) is supplied with the operative fluid of the heat pump (131) drawn upstream of the four-way valve.

14. The plant according to claim 12 or 13, wherein the second heat exchanger (101) is arranged in the first tank (25) .

15. The plant according to claim 14, wherein the second heat exchanger (101) is arranged in the top portion of the first tank (25).

16. The plant according to any one of claims from 11 to 15, comprising a third heat exchanger (102) supplied with the operative fluid of the heat pump (131) drawn downstream of the four-way valve.

17. The plant according to claim 16, wherein the third heat exchanger (102) is arranged in the first tank (25).

18. The plant according to claim 17, wherein the third heat exchanger (102) is arranged in a bottom portion of the first tank (25).

19. The plant according to claim 17 or 18, wherein the third heat exchanger (102) is arranged beneath the first heat exchanger (70).

## Patentansprüche

1. Eine integrierte thermische Anlage mit mehreren Quellen aufweisend:
einen ersten Tank (25), der zum Speichern von technischem Wasser ausgebildet ist und mit wenigstens einer Klimaanlage (3) verbunden ist;
wenigstens eine erste thermische Quelle (28; 29; 30; 31; 131), die mit dem ersten Tank (25) in Verbindung steht und zum Erwärmen des technischen Wassers ausgebildet ist;
wenigstens einen zweiten Tank (26), der zum Speichern von Sanitärwasser ausgebildet ist und mit einem Sanitärwasser-Zufuhrkreislauf (4b) verbunden ist; wobei der zweite Tank (26) mit dem ersten Tank (25) verbunden ist;
einen ersten Wärmetauscher (70), der in dem ersten Tank (25) angeordnet ist und mit einem Einlass (71) versehen ist, der mit einem Wassernetz (5) für die Zufuhr von Sanitärwasser und mit einem Auslass (74) versehen ist;
**dadurch gekennzeichnet, dass** der Auslass (74) wahlweise mit dem zweiten Tank (26) oder mit dem Sanitärwasser-Zufuhrkreislauf (4b) verbindbar ist.

2. Die Anlage nach Anspruch 1 aufweisend ein Mischventil (77), das ausgebildet ist, um den Auslass (74) des ersten Wärmetauschers (70) wahlweise mit dem zweiten Tank (26) und/oder mit dem Sanitärwasser-Zufuhrkreislauf (4b) zu verbinden.

3. Die Anlage nach Anspruch 2, wobei das Mischventil (77) ausgebildet ist, um den zweiten Tank (26) wahlweise mit dem Sanitärwasser-Zufuhrkreislauf (4b) zu verbinden.

4. Die Anlage nach irgendeinem der vorhergehenden Ansprüche, wobei der zweite Tank (26) mit einem oberen Teil des ersten Tanks (25) verbunden ist.

5. Die Anlage nach Anspruch 4, wobei der zweite Tank (26) und der erste Tank (25) eine gemeinsame Wand (35) haben.

6. Die Anlage nach Anspruch 5, wobei die Wand (35) eine Bodenwand des zweiten Tanks (26) und eine obere Wand des ersten Tanks (25) ist.

7. Die Anlage nach irgendeinem der vorhergehenden Ansprüche aufweisend eine oder mehrere erste Wärmequellen (28; 29; 30; 31; 131), die aus der Gruppe ausgewählt sind, die aufweist: eine Wärmepumpe, eine Solaranlage, einen mit Biomasse befeuerten Heizkessel, einen mit Gas befeuerten Heizkessel, einen mit flüssigem Treibstoff befeuerten Heizkessel, eine elektrische Wärmequelle.

8. Die Anlage nach irgendeinem der vorhergehenden Ansprüche aufweisend wenigstens eine zweite Wärmequelle (29; 31; 131), die mit dem ersten Tank (25) in Verbindung steht und zum Erwärmen des technischen Wassers ausgebildet ist.

9. Die Anlage nach Anspruch 8, wobei die zweite Wärmequelle (29) ein mit flüssigem oder gasförmigem Treibstoff befeuerter Heizkessel ist:

10. Die Anlage nach Anspruch 9, wobei der Heizkessel (29) eine Brennkammer (49) aufweist; wobei die Brennkammer (4) in dem ersten Tank (25) angeordnet ist.

11. Die Anlage nach Anspruch 8, wobei die zweite Wärmequelle (29; 31; 131) eine Wärmepumpe (131) ist, in der ein Betriebsfluid strömt; wobei die Wärmepumpe (131) mit wenigstens einem Kompressor und einem Vierwegeventil versehen ist.

12. Die Anlage nach Anspruch 11 aufweisend einen zweiten Wärmetauscher (101), der mit dem Betriebsfluid der Wärmepumpe (131), das stromab des Kompressors abgezogen wird, versorgt wird.

13. Die Anlage nach Anspruch 12, wobei der zweite Wärmetauscher (101) mit dem Betriebsfluid der Wärmepumpe (131), das stromauf des Vierwegeventils abgezogen wird, versorgt wird.

14. Die Anlage nach Anspruch 12 oder 13, wobei der zweite Wärmetauscher (101) in dem ersten Tank (25) angeordnet ist.

15. Die Anlage nach Anspruch 14, wobei der zweite Wärmetauscher (101) in dem oberen Teil des ersten Tanks (25) angeordnet ist.

16. Die Anlage nach irgendeinem der Ansprüche 11 bis 15 aufweisend einen dritten Wärmetauscher (102), der mit dem Betriebsfluid der Wärmepumpe (131), das stromab des Vierwegeventils abgezogen wird, versorgt wird.

17. Die Anlage nach Anspruch 16, wobei der dritte Wärmetauscher (102) in dem ersten Tank (25) angeordnet ist.

18. Die Anlage nach Anspruch 17, wobei der dritte Wärmetauscher (102) in einem Bodenteil des ersten Tanks (25) angeordnet ist.

19. Die Anlage nach Anspruch 17 oder 18, wobei der dritte Wärmetauscher (102) unterhalb des ersten Wärmetauschers (70) angeordnet ist.

## Revendications

1. Installation ayant de multiples sources thermiques intégrées comprenant :
• un premier réservoir (25) configuré pour stocker de l'eau technique et accouplé à au moins une installation de climatisation (3) ;
• au moins une première source thermique (28 ; 29 ; 30 ; 31 ; 131) associée au premier réservoir (25) et configurée pour chauffer l'eau technique ;
• au moins un second réservoir (26) configuré pour stocker de l'eau sanitaire et accouplé à un circuit d'alimentation en eau sanitaire (4b) ; le second réservoir (26) étant accouplé au premier réservoir (25) ;
• un premier échangeur de chaleur (70) agencé dans le premier réservoir (25) et pourvu d'un orifice d'entrée (71) accouplé à un réseau d'eau (5) pour recevoir de l'eau sanitaire et d'un orifice de sortie (74), **caractérisée en ce que** l'orifice de sortie (74) peut être accouplé sélectivement au second réservoir (26) ou au circuit d'alimentation en eau sanitaire (4b).

2. Installation selon la revendication 1, comprenant un robinet de mélange (77) configuré pour raccorder sélectivement l'orifice de sortie (74) du premier échangeur de chaleur (70) au second réservoir (26) et/ou au circuit d'alimentation en eau sanitaire (4b).

3. Installation selon la revendication 2, dans laquelle le robinet de mélange (77) est configuré pour raccorder sélectivement le second réservoir (26) au circuit d'alimentation en eau sanitaire (4b).

4. Installation selon l'une quelconque des revendications précédentes, dans laquelle le second réservoir (26) est accouplé à une portion de dessus du premier réservoir (25).

5. Installation selon la revendication 4, dans laquelle le second réservoir (26) et le premier réservoir (25) ont une paroi (35) en commun.

6. Installation selon la revendication 5, dans laquelle la paroi (35) est une paroi de dessous du second réservoir (26) et une paroi de dessus du premier réservoir (25).

7. Installation selon l'une quelconque des revendications précédentes, comprenant une ou plusieurs premières sources thermiques (28 ; 29 ; 30 ; 31 ; 131) sélectionnées dans le groupe consistant en : une pompe à chaleur, une installation solaire, une chaudière à biomasse, une chaudière à gaz, une chaudière à combustible liquide, une source thermique électrique.

8. Installation selon l'une quelconque des revendications précédentes, comprenant au moins une seconde source thermique (29 ; 31 ; 131) associée au premier réservoir (25) et configurée pour chauffer l'eau technique.

9. Installation selon la revendication 8, dans laquelle la seconde source thermique (29) est une chaudière à combustible liquide ou gazeux.

10. Installation selon la revendication 9, dans laquelle la chaudière (29) comprend une chambre de combustion (49) ; la chambre de combustion (49) étant agencée dans le premier réservoir (25).

11. Installation selon la revendication 8, dans laquelle la seconde source thermique (29 ; 31 ; 131) est une pompe à chaleur (131) dans laquelle un fluide opérationnel circule ; la pompe à chaleur (131) étant pourvue d'au moins un compresseur et d'un robinet à quatre voies.

12. Installation selon la revendication 11, comprenant un deuxième échangeur de chaleur (101) alimenté avec le fluide opérationnel de la pompe à chaleur (131) aspiré en aval du compresseur.

13. Installation selon la revendication 12, dans laquelle le deuxième échangeur de chaleur (101) est alimenté avec le fluide opérationnel de la pompe à chaleur (131) aspiré en amont du robinet à quatre voies.

14. Installation selon la revendication 12 ou 13, dans laquelle le deuxième échangeur de chaleur (101) est agencé dans le premier réservoir (25).

15. Installation selon la revendication 14, dans laquelle le deuxième échangeur de chaleur (101) est agencé dans la portion de dessus du premier réservoir (25).

16. Installation selon l'une quelconque des revendications 11 à 15, comprenant un troisième échangeur de chaleur (102) alimenté avec le fluide opérationnel de la pompe à chaleur (131) aspiré en aval du robinet à quatre voies.

17. Installation selon la revendication 16, dans laquelle le troisième échangeur de chaleur (102) est agencé dans le premier réservoir (25).

18. Installation selon la revendication 17, dans laquelle le troisième échangeur de chaleur (102) est agencé dans une portion de dessous du premier réservoir (25).

19. Installation selon la revendication 17 ou 18, dans laquelle le troisième échangeur de chaleur (102) est agencé en dessous du premier échangeur de chaleur (70).
